# EUROPEAN PATENT APPLICATION

(11) **EP 2 369 532 A1**
(43) Date of publication of application: **28.09.2011**
(21) Application number: 11001782.9
(22) Date of filing: 03.03.2011
(51) Int. Cl.: G06Q 10/00, G06F 17/30, G06F 21/00, H04M 1/725

(54) **System for remotely erasing data, method, server, and mobile device thereof, and computer program product**

(30) Priority: 03.03.2010 US 310247 P; 02.03.2011 US 39263
(71) Applicant: HTC Corporation, Taoyuan County 330 (TW)
(72) Inventor: Lee, Po-Yen, Taoyuan City Taoyuan County 330 (TW); Chen, Chien-Wen, Taoyuan City Taoyuan County 330 (TW); Yeh, Pai-Chang, Taoyuan City Taoyuan County 330 (TW); Lian, Li-Wen, Taoyuan City Taoyuan County 330 (TW)
(74) Representative: Carstens, Dirk Wilhelm

(57) **Abstract**

A system for remotely erasing data, a method, a server, and a mobile device thereof, and a computer program product are provided. The method is adapted for the mobile device having an internal storage unit and an external storage unit, wherein a user account of a service website is set up for the mobile device. In the method, a relationship between the user account and the mobile device is recorded in the server. The server receives a data erasing request corresponding to the user account through the service website, and sends a remote control command to the mobile device corresponding to the user account. Then, the mobile device erases data stored in the external storage unit thereof according to the remote control command.

## Description

### BACKGROUND OF THE INVENTION

### Field of the Invention

The invention relates generally to a method for erasing data. More particularly, the invention relates to a system for remotely erasing data, and a method, server, mobile device, and computer program product thereof.

### Description of Related Art

Along with the advancement of mobile technologies, mobile communication devices such as cellular phones have become indispensable tools in the lives of the modem people. Nowadays, cellular phones not only can be used for making phone calls, sending and receiving short messages, but also to provide functions such as photo capturing, to-do list writing, and allowing a user to download applications. In order to store the settings and the files generated when the user uses the cellular phone, the internal memory capacity of the cellular phone has continually increased. Additionally, many cellular phones provide an external memory card functionality to expand the memory capacity thereof. The external memory card not only has a larger storage capacity, but a further advantage is data portability.

As cellular phones diversify their functionalities and the storage space thereof expand rapidly, more and more important data is stored in the cellular phones. Therefore, losing a cellular phone undoubtedly becomes a huge inconvenience for the user. Generally speaking, when the user loses a cellular phone, as long as the phone is still turned on and the Subscriber Identity Module (SIM) card can be detected, telecommunication law enforcement officials may find the cellular phone by tracking the International Mobile Equipment Identity (IMEI) number. However, data stored in the cellular phone run the risk of being stolen by others before the phone is found.

Accordingly, cellular products having a function of remotely erasing data in an internal memory of a cellular phone are available on the market. Since the internal memory is embedded in the circuitry of the cellular phone and cannot be freely detached, therefore, when the user has set up a password for the cellular phone, the risk of data exposure is lowered by the increased difficulty of turning on or unlocking the cellular phone. However, for the external memory card which may be easily detached and read by other devices, the lack of a data protection mechanism threatens user privacy when the cellular phone is lost.

### SUMMARY OF THE INVENTION

Accordingly, the invention is directed to a system for remotely erasing data, a method, a server, and a mobile device thereof, and a computer program product, capable of remotely erasing data stored in the external storage unit of the mobile device.

An embodiment of the invention is directed to a method for remotely erasing data, adapted for a mobile device having an internal storage unit and an external storage unit, in which a user account of a service website is set up for the mobile device. The method includes recording a relationship between the user account and the mobile device in a server. The server receives a data erasing request corresponding to the user account through the service website, and the server sends a remote control command to the mobile device corresponding to the user account. The mobile device erases data stored in the external storage unit thereof according to the remote control command.

From another perspective, an embodiment of the invention is directed to a system for remotely erasing data, including a mobile device and a server providing a service website. A user account of a service website is set up for the mobile device, and the mobile device includes a wireless communication unit, an internal storage unit, an external storage unit, and a processing unit. The processing unit is coupled to the wireless communication unit, the external storage unit, and the internal storage unit. The server includes a control unit and a user database which are coupled to each other. When the service website receives a data erasing request corresponding to the user account, the control unit sends a remote control command to the mobile device corresponding to the user account according to the relationship recorded in the user database. After the mobile device receives the remote control command through the wireless communication unit, the processing unit erases data stored in the external storage unit according to the remote control command.

From another perspective, an embodiment of the invention is directed to a computer program product for loading at least one program command in a server, wherein the server records a relationship between a user account and a mobile device, the mobile device including an internal storage unit and an external storage unit, and a user account of a service website is set up for the mobile device. After being loaded in the server, the aforesaid program commands execute at least the following steps. A data erasing request corresponding to the user account is received through the service website. A remote control command is sent to the mobile device corresponding to the user account, so the mobile device erases data stored in the external storage unit thereof according to the remote control command.

From another perspective, an embodiment of the invention is directed to a computer program product for loading at least one program command in a mobile device, the mobile device including an internal storage unit and an external storage unit, and a user account of a service website is set up for the mobile device. After being loaded in the mobile device, the aforesaid program commands execute at least the following steps. A remote control command sent by a server providing a service website is received, in which the server records a relationship between the user account and the mobile device. The remote control command is sent to the mobile device corresponding to the user account after the service website receives a data erasing request corresponding to the user account. Data stored in the external storage unit is erased according to the remote control command.

From another perspective, an embodiment of the invention provides a server providing a service website, the server including a user database and a control unit which are coupled to each other. The user database records a relationship between a user account and a mobile device, in which the user account of the service website is set up for the mobile device. When the service website receives a data erasing request corresponding to the user account, the control unit sends a remote control command to the mobile device corresponding to the user account according to the relationship recorded in the user database, for ordering the mobile device to erase data stored in an external storage unit of the mobile device according to the remote control command.

From another perspective, an embodiment of the invention provides a mobile device, with a user account of a service website set up for the mobile device. The mobile device includes a wireless communication unit, an internal storage unit, an external storage unit, and a processing unit. The wireless communication unit is for receiving a remote control command from a server, in which the remote control command is sent when the server receives a data erasing request corresponding to the user account through the service website. The processing unit is coupled to the wireless communication unit, the internal storage unit, and the external storage unit. The processing unit erases data stored in the external storage unit according to the remote control command.

In summary, according to embodiments of the invention, after the user sends the data erasing request through the service website, the server sends the remote control command to the mobile device of the user through the server, and accordingly control the mobile device to automatically erase data stored in an external storage device thereof. As such, when the user loses the mobile device, the user may prevent a finder from detaching the external storage device and freely stealing the data stored therein by remotely erasing data, and thereby protecting user privacy.

In order to make the aforementioned and other features and advantages of the invention more comprehensible, embodiments accompanying figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG 1 is a schematic view illustrating a system for remotely easing data according to an embodiment of the invention.

FIG. 2 is a flowchart illustrating a method for remotely easing data according to an embodiment of the invention.

FIG. 3 is a schematic view illustrating a system for remotely easing data according to another embodiment of the invention.

FIG. 4 is a flowchart illustrating a method for remotely easing data according to another embodiment of the invention.

### DESCRIPTION OF EMBODIMENTS

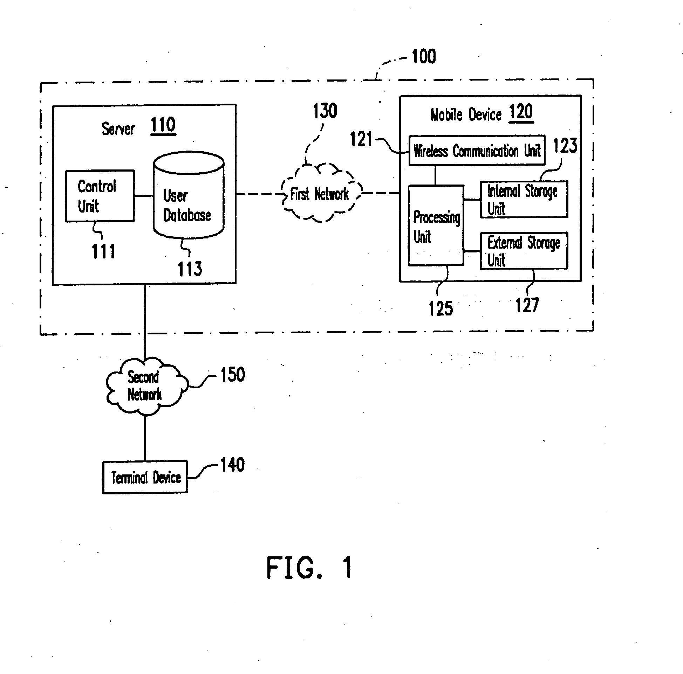

FIG. 1 is a schematic view illustrating a system for remotely erasing data according to an embodiment of the invention. Referring to FIG 1, a system 100 for remotely erasing data includes a server 110 and a mobile device 120. The mobile device 120 connects to the server 110 through a first network 130. The first network 130 may be a Third Generation Telecommunication (3G) network, a General Packet Radio Service (GPRS) network, or a Wireless Fidelity (Wi-Fi) network.

The server 110 includes a control unit 111 and a user database 113 which are coupled to each other. The control unit 111 is for controlling the overall operation of the server 110. For example, the control unit 111 may integrate the different types of content files (e.g., webpage, picture, or animation files) in a service website, and accordingly provide the service website for usage by any equipment connected to the server 110. The content files of the service website may be recorded in the server 110 or remotely, and the invention is not limited thereto. In the present embodiment, the user may register with the service website and set up a user account for the mobile device. After setting up the user account, a relationship between the user account and the mobile device is recorded in the server database 113.

The mobile device 120 includes a wireless communication unit 121, an internal storage unit 123, an external storage unit 127, and a processing unit. The mobile device 120 is, for example, a mobile phone, a smartphone, a personal digital assistant (PDA), a laptop, a tablet personal computer (PC), or a digital camera.

The wireless communication unit 121 may be a 3G module, a GPRS module, or a Wi-Fi module, or a combination of the aforesaid modules. The mobile device 120 may wirelessly connect to other equipments and transmit data to each other through the wireless communication unit 121.

The internal storage unit 123 is, for example, a non-volatile memory such as a flash memory. The data stored in the internal storage unit 123 includes a built-in data and a user data. More specifically, the built-in data is the data already stored in the internal storage unit 123 when the mobile device 120 leaves the factory. The user data is the different types of data generated when the user uses the mobile device 120, for example, the user-configured user accounts, desktops, ringtones, alarm clock times, email boxes, as well as the to-do lists written by the user, the address books, the conversation logs, the short messages or emails sent by the user using the mobile device 120, and the applications or games downloaded by user, etc., although the invention is not limited thereto. The external storage unit 127 may be a Secure Digital (SD) card, a SIM card, or other storage media which can be externally connected to the mobile device 120. The data stored in the external storage unit 127 is, for example, photograph, music, or movie files which take up a large space, although the invention is not limited thereto.

Furthermore, the internal storage unit 123 refers to a storage media that is not user-deletable. In other words, forcibly removing the internal storage unit 123 would cause the mobile device 120 to malfunction. The external storage unit 127 is externally connected to the mobile device 120 through a corresponding interface, and whether the external storage unit 127 is removed typically does not affect the operation of the mobile device 120. Moreover, the user may couple the external storage unit 127 to the other equipments to access the data therein.

The processing unit 125 is coupled to the wireless communication unit 121 and the internal storage unit 123. In an embodiment of the invention, the processing unit 125 may be implemented by a software component. In other embodiments, the processing unit 125 may also be a hardware component such as a processor, or a combination of software or hardware components. The processing unit 125 may receive commands of the server 110 through the wireless communication unit 121 to execute the corresponding operations. The detailed operations of the processing unit 125 will be elaborated later.

In the present embodiment, after a terminal device 140 (e.g. a computer system) connects to the server 110 through a second network 150 (e.g. the Internet), the user may use the terminal device 140 to issue a request to the server 110 in order to remotely erase data in the mobile device 120. In order to describe the steps of remotely erasing the data of the mobile device 120 in more detail, another embodiment will be illustrated as follows to further describe the invention.

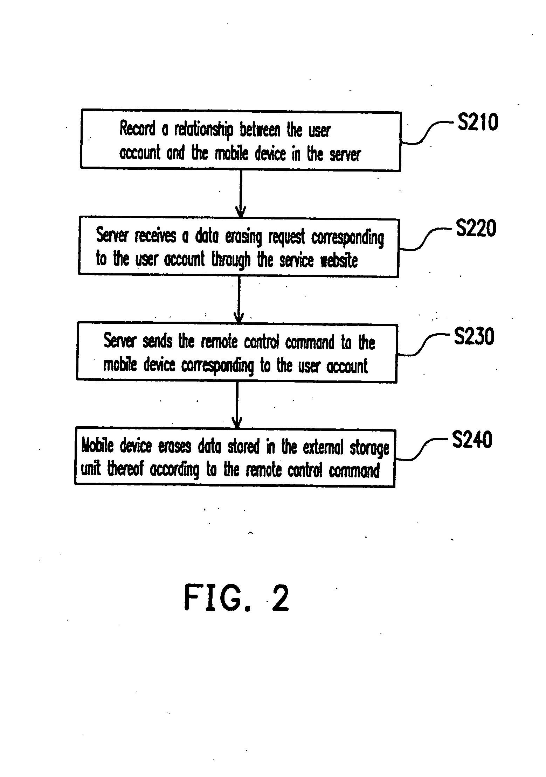

Referring to FIGs. 1 and 2, FIG. 2 is a flowchart illustrating a method for remotely easing data according to an embodiment of the invention. In the present embodiment, assume the user has set up a user account for the mobile device 120 on the service website provided by the server 110.

As shown in a Step S210, a relationship between the user account and the mobile device 120 is recorded in the user database 113 of the server 110.

In a Step S220, the control unit 111 in the server 110 receives a data erasing request corresponding to the user account through the service website. The data erasing request corresponding to the user account is triggered, for example, by at least a specific component (e.g., a button or a selection) on the service website after the user logs in the service website with the user account. Specifically, when the user logs in the service website at the terminal device 140 using the user account and passes a verification of the server 110, the user may select the button corresponding to the function of remotely erasing data in the service website. In an embodiment of the invention, the service website displays a confirmation box to ask the user to confirm the execution of this operation, or the service website displays an inquiry box to ask the user to select the file types for deletion. After the user confirms or makes a selection, the corresponding data erasing request may be transmitted to the server 110 through the second network 150.

In a Step S230, the control unit 111 in the server 110 looks up the relationship recorded in the user database 113 and finds the mobile device 120 corresponding to the user account. Under a condition that the mobile device 120 is connected to the first network 130, the control unit 111 sends the remote control command corresponding to the data erasing request to the mobile device 120. For example, the control unit 111 sends the remote control command according to a network address of the mobile device 120 under the first network 130.

As shown in a Step S240, after the mobile device 120 receives the remote control command from the server 110 through the wireless communication unit 121, the processing unit 125 erases data stored in the external storage unit 127 according to the remote control command. In an embodiment of the invention, the processing unit 125 may format the external storage unit 127 in order to erase all the data stored therein. In another embodiment, the processing unit 125 may also only delete data stored in the external storage unit 127 matching a specific file type. For example, only picture files (e.g. .jpg files) may be deleted, but not music files (e.g. .mp3 files).

As shown in FIG. 2, when the user discovers the mobile device 120 is lost, the user may trigger the data erasing request through the service website, and accordingly erase data on the mobile device 120 stored in the external storage unit 127 thereof by remotely controlling the mobile device 120 to perform data erasure through the server 110. Therefore, even though the external storage unit 127 may be easily detached, threats against the privacy of the user when others detach the external storage unit 127 to read in other devices is prevented by remotely erasing data stored therein.

In another embodiment of the invention, once the server 110 receives the data erasing request, by sending the remote control command, the control unit 111 orders the processing unit 125 of the mobile device 120 to simultaneously erase all or a portion of the data stored in the external storage unit 127 and the internal storage unit 123.

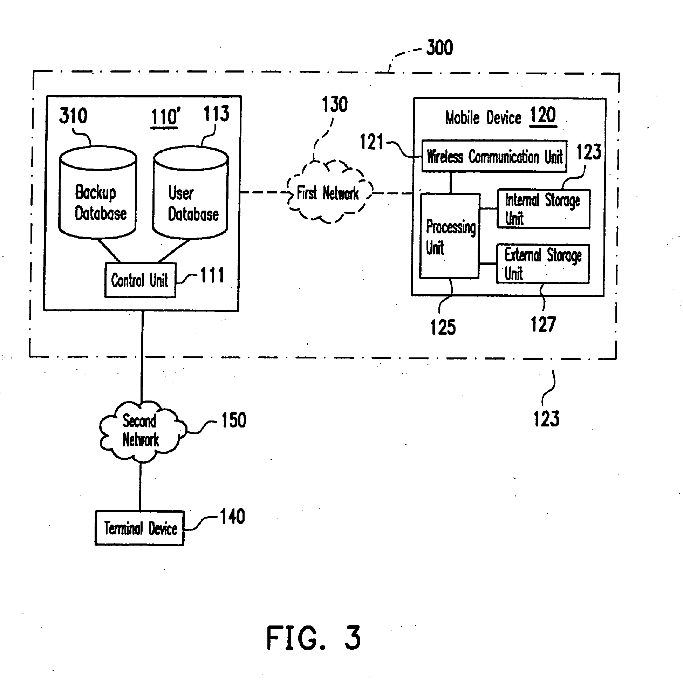

FIG. 3 is a schematic view illustrating a system for remotely easing data according to another embodiment of the invention. Referring to FIG 3, a system 300 for remotely erasing data is similar to the system 100 for remotely erasing data, therefore only the differences will be further elaborated below.

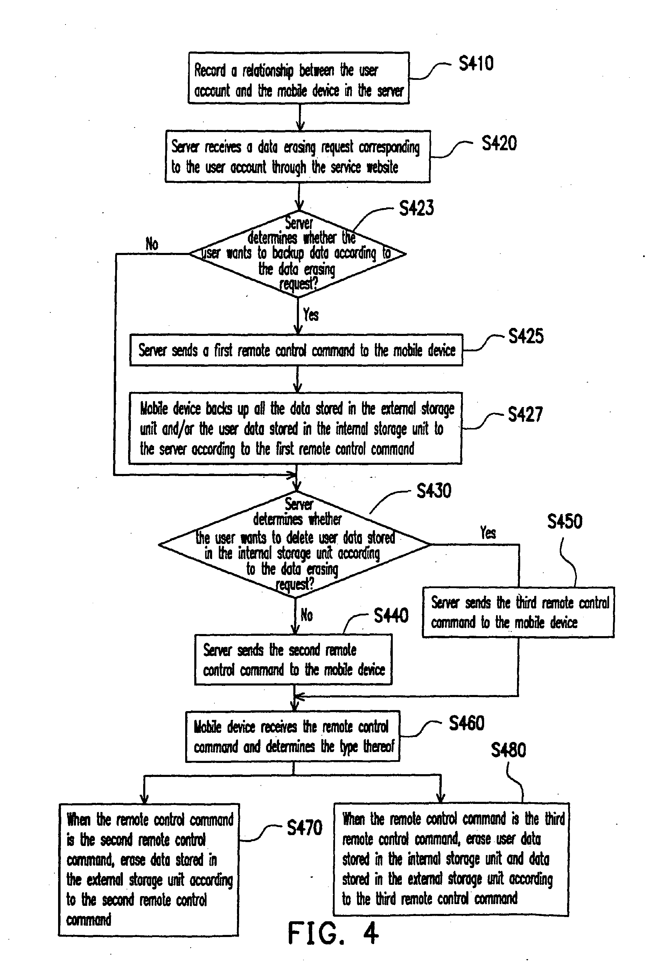

As shown in FIG. 3, a server 110' includes not only the control unit 111 and the user database 113, but also includes a backup database 310 coupled to the control unit 111. In the present embodiment, the backup database 310 is for storing any mobile device data used to set up the user account of the service website. FIG 4 is used below to describe the detailed operation of the system 300 for remotely erasing data. In the present embodiment, the system 300 for remotely erasing data may provide a more flexible method for remotely erasing data stored in the mobile device 120. The user of the mobile device 120 has set up a user account for the mobile device 120 on the service website.

As shown in a Step S410, a relationship between the user account and the mobile device 120 is recorded in the user database 113 of the server 110'. In a Step S420, the server 110' receives a data erasing request corresponding to the user account through the service website. For example, when the user discovers the mobile device 120 is lost, the user may log in to the service website provided by the server 110' at the terminal device 140 using the user account. After selecting the control selection on the service website corresponding to the remote data erasing function, the data erasing request is triggered. In the present embodiment, the service website may also allow the user to determine whether to backup the data stored in the mobile device 120 after the user selects the erasing operation. Alternatively, the user may also be able to select from only removing the data stored in the external storage unit 127 of the mobile device 120, or simultaneously erasing the data stored in the internal storage unit 123 and the external storage unit 127. According to the user selection, the service website generates the corresponding data erasing request, and the data erasing request is sent to the server 110' through the second network 150.

Therefore, after the server 110' receives the data erasing request, the control unit 111 in the server 110' determines whether the user wants to backup data according to the data erasing request, as shown in a Step S423. When the user wants to backup data, the control unit 111 in the server 110' sends a first remote control command to the mobile device 120, as shown in a Step S425. As shown in a Step S427, after the mobile device 120 receives the first remote control command from the server 110' through the wireless communication unit 121, the processing unit 125 backs up all the data stored in the external storage unit 127 and/or the user data stored in the internal storage unit 123 to the server 110' according to the first remote control command. In other words, the data that needs backup are sent to the server 110' through the first network 130, and stored in the backup database 310. It should be noted that, in another embodiment of the invention, after the server 110' receives the data erasing request, the control unit 111 may also directly order the mobile device 120 to backup the data stored therein to the backup database 310.

As shown in a Step S430, according to the data erasing request, the control unit 111 in the server 110' determines whether the user wants to delete the user data stored in the internal storage unit 123 of the mobile device 120.

When the user does not want to delete the user data, the control unit 111 in the server 110' sends a second remote control command to the mobile device 120, as shown in a Step S440. When the user wants to delete the user data, the control unit 111 in the server 110' sends a third remote control command to the mobile device 120, as shown in a Step S450.

In a Step S460, after the mobile device 120 receives the remote control command from the server 110', in order to currently execute the request from the user, the processing unit 125 determines whether the remote control command is the second remote control command or the third remote control command.

As shown in a Step S470, when the remote control command is the second remote control command, the user has not indicated erasing the data stored in the internal storage unit 123 when the user triggers the data erasing request through the service website. Therefore, the processing unit 125 only erases data stored in the external storage unit 127 according to the second remote control command. In an embodiment of the invention, the processing unit 125 formats the external storage unit 127 in order to erase all the data stored therein. In another embodiment, the processing unit 125 may also erase a portion of the data stored in the external storage unit 127 according to the second remote control command. Specifically, the processing unit 125 may determine each type of files stored in the external storage unit 127, and erase data matching a specific file type. The specific file type is, for example, set by the user through the service website.

As shown in a Step S480, when the remote control command is the third remote control command, the user has indicated erasing the data stored in the internal and external storage units when the user triggers the data erasing request through the service website. Therefore, the processing unit 125 erases data stored in the internal storage unit 123 and the external storage unit 127 according to the third remote control command. Specifically, the processing unit 125 erases all the data stored in the external storage unit 127 or the data matching the specific file type, and the processing unit 125 also erases all the user data (e.g., the data generated when the user uses the mobile device 120) stored in the internal storage unit 123 or the user data matching the specific file type. To be specific, in an embodiment of the invention, the processing unit 125 may erase all of the user data stored in the internal storage unit 123 according to the third remote control command. Under this condition, the configuration values set for each function when the user uses the mobile device 120, as well as the files generated during download are all erased. In another embodiment, the processing unit may also only erase the user data matching the specific file type according to the third remote control command, and the specific file type may be set by the user through the service website. For example, the processing unit 125 only erases the conversation logs and short messages stored in the internal storage unit 123, but keeps data of other file types and the configuration values set for each function.

Therefore, when the user loses the mobile device 120, the user may decide whether to backup the data stored in the mobile device 120 to the server 110', erase only the data stored in the external storage unit 127 of the mobile device 120, or simultaneously erase the data stored in the external storage unit 127 and the internal storage unit 123 through the service website. Accordingly, the user can prevent a finder from freely accessing the data content stored in the mobile device 120 by the user.

Thereafter, if the user finds the mobile device 120 and reconfigures the mobile device 120 with the previously registered user account, once the server 110' verifies the user account and a device information of the mobile device 120, the server 110' may synchronize the data stored in the backup database 310 with the internal storage unit 123 and/or the external storage unit 127 of the mobile device 120. As such, after the mobile device 120 is found, the time used to recover the mobile device 120 to a previous user state can be drastically reduced. Alternatively, the user may also configure other mobile devices with this user account, and thereby synchronize the data stored in the backup database 310 to the mobile device.

An embodiment of the invention provides a computer program product, in which the computer program product is composed by a plurality of program commands. After the program commands are loaded into a server and executed, the server can achieve the effects illustrated in the afore-described embodiments. Moreover, an embodiment of the invention provides a computer program product, in which after the plurality of program commands of the computer program product are loaded in the mobile device, the mobile device can complete the operations illustrated in the afore-described embodiments. The computer program product may be stored in any data storage medium (e.g., including a read only memory, a random access memory, a magnetic tape, a floppy disk, a hard disk, an optical disk, a transmission medium, etc.) or may be directly provided through a network transmission, which is not to be limited by invention herein.

In view of the foregoing, in the method, system, server, mobile device, and computer program product for remotely erasing data according to embodiments of the invention, the server remotely issues a command and controls the mobile device to erase data stored in the external storage unit thereof. Accordingly, before the user finds the lost mobile device, the data stored in the external storage unit can be safe from free access by others, thereby achieving user privacy protection.

Although the invention has been described with reference to the above embodiments, it will be apparent to one of the ordinary skill in the art that modifications to the described embodiment may be made without departing from the spirit of the invention. Accordingly, the scope of the invention will be defined by the attached claims not by the above detailed descriptions.

## Claims

1. A method for remotely erasing data, adapted for a mobile device (120) comprising an internal storage unit (123) and an external storage unit (127), wherein a user account of a service website is set up for the mobile device (120), the method comprising:
recording (S210, S410) a relationship between the user account and the mobile device (120) in a server (110);
with the server (110), receiving (S220, S420) a data erasing request corresponding to the user account through the service website;
with the server (110), sending (S230, S440) a remote control command to the mobile device (120) corresponding to the user account; and
with the mobile device (120), erasing (S240, S470) data on the mobile device (120) stored in the external storage unit (127) thereof according to the remote control command.

2. The method as claimed in claim 1, further comprising:
with the mobile device (120), erasing data stored in the external storage unit (127) matching a specific file type according to the remote control command.

3. The method as claimed in any one of claims 1 to 2, further comprising:
with the mobile device (120), erasing (S480) a user data stored in the internal storage unit (123) according to the remote control command.

4. The method as claimed in any one of claims 1 to 3, further comprising:
with the mobile device (120), backing up (S427) all the data stored in the external storage unit (127) to the server (110') according to the remote control command.

5. The method as claimed in claim 3, further comprising:
with the mobile device (120), backing up (S427) the user data stored in the internal storage unit (123) to the server (110') according to the remote control command.

6. A system (100) for remotely erasing data, comprising:
a mobile device (120) with a user account of a service website set up, the mobile device (120) comprising:
a wireless communication unit (121);
an internal storage unit (123);
an external storage unit (127); and
a processing unit (125) coupled to the wireless communication unit (121), the internal storage unit (123), and the external storage unit (127); and
a server (110) providing the service website, the server (110) comprising:
a user database (113) recording a relationship between the user account and the mobile device (120); and
a control unit (111) coupled to the user database (113),
wherein when the service website receives a data erasing request corresponding to the user account, the control unit (111) sends a remote control command to the mobile device (120) corresponding to the user account according to the relationship recorded in the user database (113),
after the mobile device (120) receives the remote control command through the wireless communication unit (121), the processing unit (125) erases data stored in the external storage unit (127) thereof according to the remote control command.

7. The system (100) as claimed in claim 6, wherein the processing unit (125) erases data stored in the external storage unit (127) matching a specific file type according to the remote control command.

8. The system (100) as claimed in any one of claims 6 to 7, wherein the processing unit (125) erases user data stored in the internal storage unit (123) of the mobile device (120) according to the remote control command.

9. The system (300) as claimed in claim 8, the server (110') further comprising:
a backup database (310) coupled to the control unit (111),
wherein the processing unit (125) backs up all the data stored in the external storage unit (127) to the backup database (310) according to the remote control command.

10. The system (300) as claimed in claim 9, wherein the processing unit (125) backs up the user data stored in the internal storage unit (123) to the backup database (310) according to the remote control command.

11. A computer program product, comprising at least one program instruction for performing the method for remotely erasing data according to any one of claims 1 to 5.

12. A server (110) providing a service website, comprising:
a user database (113) recording a relationship between a user account and a mobile device (120), wherein the user account of the service website is set up for the mobile device (120); and
a control unit (111) coupled to the user database (113),
wherein when the service website receives a data erasing request corresponding to the user account, the control unit (111) sends a remote control command to the mobile device (120) corresponding to the user account according to the relationship recorded in the user database (113), for ordering the mobile device (120) to erase data stored in an external storage unit (127) of the mobile device (120) according to the remote control command.

13. The server (110') as claimed in claim 12, wherein the control unit (111) sends the remote control command to the mobile device (120) corresponding to the user account, for ordering the mobile device (120) to erase data stored in the external storage unit (127) matching a specific file type according to the remote control command, the server (110') further comprising:
a backup database (310) coupled to the control unit (111),
wherein the control unit (111) sends the remote control command to the mobile device (120) corresponding to the user account, for ordering the mobile device (120) to backup all the data stored in the external storage unit (127) to the backup database (310) according to the remote control command.

14. A mobile device (120), with a user account of a service website set up for the mobile device (120), the mobile device (120) comprising:
a wireless communication unit (121) receiving a remote control command from a server (110), wherein the remote control command is sent when the server (110) receives a data erasing request corresponding to the user account through the service website;
an internal storage unit (123);
an external storage unit (127); and
a processing unit (125) coupled to the wireless communication unit (121), the internal storage unit (123), and the external storage unit (127); the processing unit (125) erasing data stored in the external storage unit (127) according to the remote control command.

15. The mobile device (120) as claimed in claim 14, wherein the processing unit (125) erases data stored in the external storage unit (127) matching a specific file type according to the remote control command,
the processing unit (125) backs up all the data stored in the external storage unit (127) to the server (110') according to the remote control command.
